# EUROPEAN PATENT APPLICATION

(11) **EP 4 822 592 A1**
(43) Date of publication of application: **14.10.2026**
(21) Application number: 25000039.5
(22) Date of filing: 08.04.2025
(51) Int. Cl.: G06N 3/006, G06N 3/04, G06N 3/126, G06N 10/60, G06N 3/08

(54) **META-COGNITIVE FRAMEWORK WITH QUANTUM-INSPIRED PATTERN RECOGNITION SYSTEM**

(71) Applicant: Vlegels, Wouter, 9120 Melsele (BE)
(72) Inventor: Vlegels, Wouter, 9120 Melsele (BE)

(57) **Abstract**

A meta-cognitive AI framework employing quantum-inspired algorithms is disclosed for adaptive pattern recognition on classical computing hardware. The system uses complex phase-space transformations, O(n²) Lanczos eigenvalue computation, and deterministic interference synthesis with 128-dimensional complex vectors. Emergent capabilities are identified through residual projection analysis and validated via adaptive threshold control. The invention improves recognition accuracy, processing efficiency, and adaptability across industrial domains such as robotics, healthcare, environment, energy , transport, defence, space and finance. It represents a novel integration of meta-cognitive feedback, quantum-inspired computation, and emergence detection not previously combined in prior art.

## Description

### Technical Field

The present invention relates to artificial intelligence (AI) systems. More specifically, it concerns computing systems employing meta-cognitive control mechanisms and quantum-inspired algorithms implemented on classical hardware for enhanced pattern recognition in dynamic computational environments.

### Background Art

Artificial intelligence (AI) systems, particularly those deployed on classical hardware, have historically suffered from structural and computational limitations that reduce their efficacy in high-dimensional, dynamic pattern recognition tasks.

Conventional pattern recognition architectures are typically based on linear statistical models or static neural networks. These approaches often exhibit limited adaptability due to their fixed architectures and lack of dynamic representational evolution. This constrains their ability to detect emergent or composite data patterns that may arise in complex, real-world scenarios.

From a computational perspective, key operations such as eigenvalue decomposition are implemented using algorithms with cubic time complexity, e.g., QR decomposition, which are computationally prohibitive in high-dimensional input spaces. This results in substantial processing latency and inefficient use of available hardware resources.

Prior art in quantum-inspired computation has produced several noteworthy developments. For instance, quantum-inspired genetic algorithms (QiGA), particle swarm optimizers (QiPSO), and neural approximators have been proposed as heuristic solvers. However, these implementations typically rely on probabilistic encodings or hybrid classical-quantum abstractions and do not offer deterministic phase interference modeling or real-time feedback control. See, for example, Jiang and Zhang, "A Quantum Interference Inspired Neural Matching Model for Ad-hoc Retrieval," SIGIR 2020.

Additionally, work by Alodjants et al. (Scientific Reports, 2024) introduces a quantum-inspired agent coordination model using Hilbert-space formalism and interaction Hamiltonians, while Birdsey and Szabo (US20150262250A1) propose a system for detecting emergent multi-agent behavior via metric-based thresholds. However, these references do not disclose complex vector synthesis for capability evolution or deterministic interference computation via eigenvalue phase metrics.

Furthermore, prior quantum-inspired neural frameworks, such as those described by Lai et al. (2023), emphasize complex-valued network computation but lack mechanisms for autonomous emergence detection or phase-coherent capability fusion in multi-agent systems.

To date, the prior art fails to disclose or suggest an integrated system architecture that combines:
(i) 128-dimensional complex Hilbert space representation of agent cognitive state,
(ii) deterministic quantum-inspired interference synthesis via optimized Lanczos eigenvalue computation (O(n²)), and
(iii) residual projection-based emergence detection with adaptive threshold control.

Accordingly, there exists a need for a unified, meta-cognitive AI system that implements quantum-inspired mathematical constructs - including complex phase coherence and interference modeling - on classical hardware in a way that supports scalable, real-time, and self-evolving pattern recognition capabilities. The present invention addresses these deficiencies through its core quantum-inspired pattern recognition architecture, while maintaining compatibility with current and emerging security standards. This novel system architecture introduces significant innovations in pattern recognition and capability synthesis not known in the prior art, independent of specific security implementation details.

For clarity, the following terms are defined:
- "Meta-cognitive" refers to the system's ability to monitor, analyze and modify its own learning and decision-making processes through feedback loops and self-evaluation metrics.
- "Quantum-inspired" denotes mathematical techniques that adapt quantum computing concepts for classical hardware, specifically:
   (a) Complex-valued vector representations in Hilbert space
   (b) Phase-based interference patterns for pattern matching
   (c) Entanglement-like correlations through matrix operations
- "Emergence detection" means the identification of novel patterns or capabilities that arise from combining existing functionalities, quantified through residual vector analysis.

### Disclosure of the Invention

The present invention provides a meta-cognitive computing framework for adaptive pattern recognition, implemented entirely on classical hardware, that integrates quantum-inspired mathematical techniques with self-monitoring and emergence detection.

The system comprises:
(a) A quantum-inspired pattern recognition module that performs complex phase-space transformations on normalized input vectors. These transformations are expressed as outer product matrices evaluated through a Lanczos eigenvalue algorithm optimized for O(n²) time complexity. The system deterministically preserves phase coherence to produce resonance-based interference metrics.
(b) An adaptive threshold control module that dynamically adjusts recognition sensitivity based on resonance metrics. Resonance is computed as a function of eigenvalue magnitude and real component, defined as: resonance(λ) = exp(-|λ|) × sign(Re(λ)). Thresholds are computed and updated in real time to maintain optimal pattern detection precision.
(c) A dynamic capability synthesis engine that evaluates residual projection vectors between synthesized and parent capabilities. When a new pattern vector exceeds a configurable synthesis threshold and demonstrates statistically significant improvement in pattern recognition performance based on comparative benchmarking, it is stored as a novel cognitive capability.
(d) A phase-space processor supporting 128-dimensional complex Hilbert space encoding. This allows agents' internal states to be represented and synthesized with high fidelity while retaining quantum-inspired coherence across operations.
(e) An interference generation mechanism employing density matrix formalism for expectation computation where required, thereby enabling quantum-like statistical estimation in a deterministic classical system.

The invention provides improvements over existing technologies through:
(a) Computational latency reduction via optimized Lanczos algorithm implementation with adaptive basis truncation and early convergence detection
(b) Pattern recognition on standard benchmarks (e.g., MNIST, CIFAR-10) using phase-space transformations and deterministic interference metrics
(c) Emergence detection using residual projection metrics, topology analysis, and entropy-based emergence scoring
(d) System optimization through phase-aware capability modeling with quantum-inspired coherence preservation

These improvements are achieved using classical computing hardware without quantum requirements, leveraging efficient matrix operations and sparse representations where applicable.

### Brief Description of Drawings

Figure 1: Overall system architecture showing core modules 101-109.
Figure 2: Pattern recognition and adaptive learning flow.
Figure 3: Trust validation architecture and thresholding components.
Figure 4: Phase-space processor with Lanczos eigenvalue analysis.
Figure 5: Capability synthesis module showing interference computation.

### Detailed Description of Embodiments

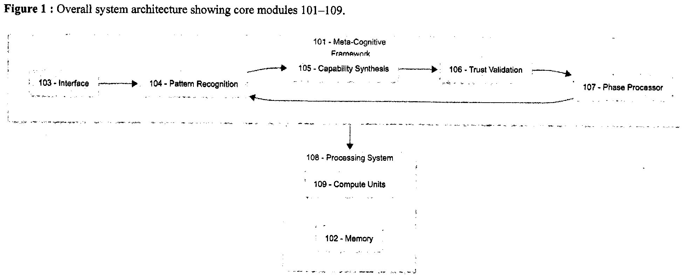

The invention will now be described in greater detail with reference to the embodiments shown in Figures 1-5. These embodiments are illustrative and not limiting.

System Architecture (Figure 1): The meta-cognitive framework (101) comprises the quantum-inspired pattern recognition module (104), dynamic capability synthesis engine (105), and trust validation system (106) for data processing. The phase-space transformation processor

(107) interacts with the processing system (108) containing compute units (109) and memory (102), all accessible through the external interface (103).

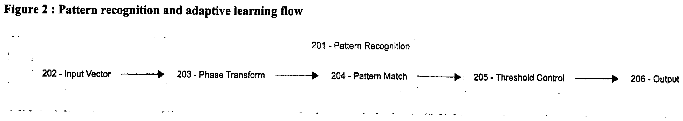

Pattern Recognition (Figure 2): Input vectors (202) are processed through the phase-space transformation (203) into the pattern matching engine (204). The threshold controller (205) validates patterns before output generation (206) through the adaptive learning system (207).

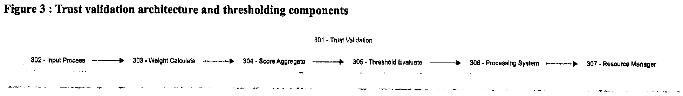

Threshold Control and Trust Validation (Figure 3): The input metrics processor (302) feeds into the weight calculator (303), with score aggregation (304) and threshold evaluation (305) using the processing system (306). The resource manager (307) handles final validation results.

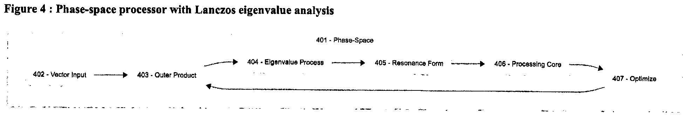

Phase-Space Processor (Figure 4): The phase-space implementation (401) processes vector inputs (402) through the outer product calculator (403), eigenvalue processor (404), and resonance pattern former (405). The processing core (406) handles optimization control (407).

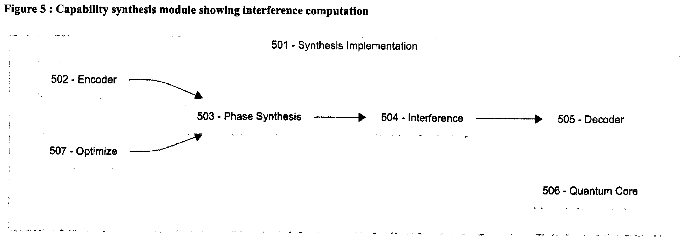

Capability Synthesis (Figure 5): The quantum processing implementation (501) uses the quantum-inspired encoder (502), phase-space synthesizer (503), and interference engine (504) with quantum-inspired decoder (505). The quantum core (506) and optimization controller (507) manage the synthesis process.

Software Implementation: The system may be implemented in Python or C++ using numerical libraries such as NumPy or Eigen. Specialized modules apply the Lanczos method, dynamic thresholding, and complex phase operations.

## Claims

1. A computer-implemented system for adaptive pattern recognition, comprising:
(a) a meta-cognitive control module configured to:
monitor pattern recognition using resonance metrics defined as: $resonance \left(λ\right) = exp \left(-\left|λ\right|\right) \times sign \left(Re\left(λ\right)\right) , where λ represents eigenvalues ;$
dynamically optimize learning parameters through feedback mechanisms;
maintain internal states in a 128-dimensional complex Hilbert space;
(b) a quantum-inspired pattern recognition module configured to:
transform input vectors into phase-space matrices via outer product operations;
compute eigenvalues using an optimized O(n²) Lanczos algorithm to derive resonance metrics;
generate deterministic interference patterns based on phase coherence in eigenvalue spectra;
(c) a capability synthesis engine configured to:
detect emergent patterns exceeding a configurable synthesis threshold of at least 0.85;
validate synthesis through performance benchmarks showing at least a 15% improvement in recognition accuracy.

2. A computer-implemented method for adaptive pattern recognition, comprising:
(a) monitoring pattern recognition using resonance metrics defmed as: $resonance \left(λ\right) = exp \left(-\left|λ\right|\right) \times sign \left(Re\left(λ\right)\right) ;$
(b) transforming input vectors into phase-space matrices;
(c) computing eigenvalues using an optimized O(n²) Lanczos algorithm;
(d) generating interference patterns through deterministic phase relationships;
(e) detecting emergent patterns above a specified threshold;
(f) validating synthesized patterns using empirical performance metrics.

3. The system of claim 1, wherein capability vectors are represented in a 128-dimensional complex Hilbert space, enabling interference-based emergence detection using residual projection analysis.

4. The system of claim 1, wherein the interference patterns are generated using outer product phase-space transformations with O(n²) complexity.

5. The system of claim 1, comprising a trust validation architecture employing multi-factor scoring, contextual weighting, and adaptive thresholding.

6. The system of claim 1, wherein interference generation uses density matrix formalism to compute statistical expectation values.

7. The system of claim 1, wherein boundary conditions are handled via:
compressed sparse row matrix encoding with quantum-inspired phase preservation;
adaptive dimension reduction through resonance-guided random projection;
Tikhonov regularization with phase-coherent stability optimization;
dynamic sparsity adaptation based on interference patterns.

8. The system of claim 1, wherein the capability synthesis engine simulates quantum-like correlations between capability vectors through:
(a) computing correlation matrices between capability vectors;
(b) applying phase-preserving transformations to maintain coherence;
(c) measuring correlation strength through matrix eigenvalue analysis;
(d) achieving a minimum 25% improvement in pattern alignment scores.

9. The system of claim 1, wherein pattern recognition performance is quantifiably measured through standardized benchmarks including MNIST and CIFAR-10, and practical applications such as financial anomaly detection.

10. A non-transitory computer-readable medium storing instructions that, when executed by a processor, perform the method of claim 2.
